# EUROPEAN PATENT SPECIFICATION

(11) **EP 2 765 664 B1**
(45) Date of publication and mention of the grant of the patent: **01.03.2017**
(21) Application number: 12838708.1
(22) Date of filing: 28.09.2012
(51) Int. Cl.: H02H 3/16, B60L 3/00, B60L 11/18, H01M 10/44, H02J 7/00, B60L 3/04, H02H 7/18

(54) **ELECTRIC-VEHICLAR CHARGE AND DISCHARGE DEVICE**
ELEKTROFAHRZEUG EINLADE- UND AUFLADEGERÄT
DISPOSITIF DE CHARGE ET DÉCHARGE POUR VÉHICULE ÉLECTRIQUE

(30) Priority: 03.10.2011 JP 2011219403; 14.11.2011 JP 2011249171
(43) Date of publication of application: 13.08.2014
(73) Proprietor: Panasonic Intellectual Property Management Co., Ltd., Osaka-shi, Osaka 540-6207 (JP)
(72) Inventor: KANDA, Masataka, Osaka-shi, Osaka 540-6207 (JP); KOSHIN, Hiroaki, Osaka-shi, Osaka 540-6207 (JP); YAMAGUCHI, Kenji, Osaka-shi, Osaka 540-6207 (JP)
(74) Representative: Appelt, Christian W.
(86) International application number: PCT/JP2012/075188
(87) International publication number: WO 2013/051484

(56) References cited:
- JP-A- 2002 315 193
- JP-A- 2002 315 193
- JP-A- 2010 110 055
- JP-A- 2010 110 055
- JP-A- 2010 239 773
- JP-A- 2010 239 773
- JP-A- 2011 038 898

## Description

### Technical Field

The present invention relates to electric-vehicular charge and discharge devices and particular to an electric-vehicular charge and discharge device to charge secondary batteries of electric vehicles such as electric automobiles and allow the secondary batteries to discharge stored electric charges to supply electricity to loads.

### Background Art

Document 1 (JP 2010-239827 A) discloses an electric-automotive charger for charging secondary batteries of electric vehicles such as electric automobiles.

The prior art disclosed in document 1 teaches that a communication earth line connects a negative electrode of a control system power source of an electric-automotive charger to an automotive body to enable data communication between the charger and the electric automobile and this communication earth line is grounded through a grounding line.

The electric-automotive charger includes a ground fault detector. The ground fault detector includes a series circuit of resistors with the same resistance, a current detector, and a controller. The series circuit is connected between positive and negative charge lines. The current meter sequentially outputs a measurement of a DC current flowing through the grounding line grounding a point between the resistors. The controller compares the measurement of the current from the current meter with a threshold to detect a ground fault in the electric-automotive charger and a ground leakage in the electric automobile.

The aforementioned prior art can detect both a ground fault in the electric-automotive charger and a ground leakage in the electric automobile while the electric automobile is charged.

Recently, there have been developed systems for supply electricity from secondary batteries of electric automobiles to loads other than the electric automobile (e.g., electric appliances in residences), so called V2H (Vehicle-to-Home) system.

However, when the electric automobile supplies electricity to loads outside the automotive body, a ground fault may occur in a cable (charge and discharge cable) connecting the electric-automotive charge and discharge device to the electric automobile. The ground fault detector of the prior art disclosed in document 1 cannot detect such a ground fault. In more detail, in the prior art disclosed in document 1, the secondary battery is not grounded, and thus the ground fault detector can detect a ground leakage from the secondary battery to the automotive body but cannot detect a ground fault in a cable outside the automotive body.

To safely supply electricity from the secondary batteries of the electric vehicles (such as electric automobiles) to the loads outside the electric vehicles, it is necessary to enable detection of a ground fault which has occurred in a load outside the electric automobile (especially, a cable) while the secondary battery supplies electricity.

JP 2002 315 193 A describes a power control system that comprises an electric car having a secondary battery, and a control box that is connected to a power feed system and the power system in a building, can be connected to the secondary battery in the electric car, and supplies power that is fed from the power feed system to the power system in the building. The control box is connected to the electric car. The power control system supplies the battery power in the secondary battery to the power system in the building when the amount of charge in the secondary battery exceeds a preset reference remainder, and charges the secondary battery using the power that is fed from the power feed system when the amount of charge in the secondary battery is less than the reference remainder.

JP 2010 239773 A describes that when a combination between a ground fault detecting system used by a ground fault detecting section of a charger and a short-circuit detecting system used by a short-circuit detecting section of an electric vehicle, forms a closed loop between the ground fault detecting section and the short-circuit detecting section, and is likely to falsely detect a ground fault or short-circuit based on an AC current flowing in the closed loop, either the ground fault detecting section or the short-circuit detecting section is disconnected from the ground to prevent the formation of the closed loop. Alternatively, the detection of either of them is stopped. A ground fault in the charger and short-circuit of the electric vehicle are detected.

JP 2010 110055 A describes a charging cable for an electric vehicle that includes: a power plug connected to an electrical outlet of commercial power; a temperature sensor that detects the temperature of the power plug; a connector for vehicles that is connected to a vehicle-side connector of an electric vehicle and supplies commercial power; a switching circuit that opens and closes the electric pathway between the power plug and the connector for vehicles; and a control circuit having an electric leak detection unit that detects an electric leak based on the current passed through the electric pathway. When a temperature signal outputted by the temperature sensor exceeds a predetermined temperature or the electric leak detection unit 14 detects an electric leak while the battery of an electric vehicle is being charged, the control circuit transmits a control signal to the switching circuit. As a result, the supply of commercial power from the power plug to the connector for vehicles is stopped.

### Summary of Invention

In view of the above insufficiency, the present invention has aimed to improve the safety in power supply from a secondary battery of an electric vehicle to a load outside the electric vehicle. The invention is defined by independent claim 1. Preferred embodiments are described in dependent claims 2 to 13.

The electric-vehicular charge and discharge device of the first aspect in accordance with the present invention includes a power converter, a grounding unit, a ground fault detector, and a switcher. The power converter is interposed between an external circuit and a pair of power terminals of a secondary battery unit provided to an electric vehicle, and is configured to convert power between the external circuit and the secondary battery unit. The grounding unit is configured to connect at least one of the pair of power terminals of the secondary battery unit to a grounding point to be connected to the power converter. The ground fault detector is configured to determine whether a ground fault has occurred in a power supply path between the power converter and the secondary battery unit. The switcher is configured to, when the ground fault detector determines that a ground fault has occurred in the power supply path, separate the secondary battery unit from the power supply path.

According to the electric-vehicular charge and discharge device of the second aspect in accordance with the present invention, in addition to the first aspect, the grounding unit is configured to, when a ground fault has occurred in the power supply path, connect at least one of the pair of power terminals of the secondary battery unit to the grounding point so as to cause a difference between a current flowing through one of the pair of power terminals and another current flowing through the other of the pair of power terminals.

According to the electric-vehicular charge and discharge device of the third aspect in accordance with the present invention, in addition to the first or second aspect, the grounding unit includes a grounding line for connecting at least one of the pair of power terminals of the secondary battery unit to the grounding point.

According to the electric-vehicular charge and discharge device of the fourth aspect in accordance with the present invention, in addition to the third aspect, the grounding unit includes a series circuit of two impedance components between the pair of power terminals of the secondary battery unit. The grounding line connects a connection point of the two impedance components to the grounding point. The two impedance components have the same impedance.

According to the electric-vehicular charge and discharge device of the fifth aspect in accordance with the present invention, in addition to the third or fourth aspect, the electric-vehicular charge and discharge device further includes a selector. The selector is configured to separate the grounding line from the grounding point while the secondary battery unit is charged, and to connect the grounding line to the grounding point and separate the power converter from the grounding point while the secondary battery unit discharges.

According to the electric-vehicular charge and discharge device of the sixth aspect in accordance with the present invention, in addition to any one of the first to fifth aspects, the electric-vehicular charge and discharge device further includes a cable connecting the power converter to the pair of power terminals of the secondary battery unit. The grounding unit and the ground fault detector are provided to the cable.

According to the electric-vehicular charge and discharge device of the seventh aspect in accordance with the present invention, in addition to any one of the first to fifth aspects, the electric-vehicular charge and discharge device further includes: a cable connecting the power converter to the pair of power terminals of the secondary battery unit; and a plug connector configured to be detachably connected to a receptacle connector of the electric vehicle. The cable has one end connected to the power converter and the other end connected to the plug connector. The grounding unit and the ground fault detector are provided to the plug connector.

According to the electric-vehicular charge and discharge device of the eighth aspect in accordance with the present invention, in addition to any one of the first to fifth aspects, the electric-vehicular charge and discharge device further includes a cable connecting the power converter to the pair of power terminals of the secondary battery unit. The ground fault detector is provided to the cable. The grounding unit is provided to the electric vehicle.

According to the electric-vehicular charge and discharge device of the ninth aspect in accordance with the present invention, in addition to any one of the first to fifth aspects, the grounding unit and the ground fault detector are provided to the electric vehicle.

According to the electric-vehicular charge and discharge device of the tenth aspect in accordance with the present invention, in addition to any one of the first to ninth aspects, the ground fault detector is configured to, when acknowledging that a difference between magnitudes of a current flowing through one of the pair of power terminals and another current flowing through the other of the pair of power terminals exceeds a predetermined threshold, determine that a ground fault has occurred in the power supply path.

According to the electric-vehicular charge and discharge device of the eleventh aspect in accordance with the present invention, in addition to any one of the first to tenth aspects, the power converter is configured to perform a first conversion process to convert power from the external circuit into predetermined first power and supply the resultant first power to the pair of power terminals of the secondary battery unit, and to perform a second conversion process to convert power from the pair of power terminals of the secondary battery unit into predetermined second power and supply the resultant second power to the external circuit.

According to the electric-vehicular charge and discharge device of the twelfth aspect in accordance with the present invention, in addition to any one of the first to eleventh aspects, the external circuit is an AC circuit connected to an AC power source. The secondary battery unit includes a secondary battery. The pair of power terminals are positive and negative electrodes of the secondary battery. The power converter includes an AC/DC converter configured to convert AC power from the external circuit into DC power suitable for the secondary battery unit and convert DC power from the secondary battery unit into AC power suitable for the external circuit.

According to the electric-vehicular charge and discharge device of the thirteenth aspect in accordance with the present invention, in addition to any one of the first to eleventh aspects, the external circuit is an AC circuit connected to an AC power source. The secondary battery unit includes a secondary battery and a charge and discharge unit including the pair of power terminals. The charge and discharge unit is configured to perform a charge process to charge the secondary battery with AC power received by the pair of power terminals and to perform a discharge process to convert power from the secondary battery into AC power and output the resultant AC power from the pair of power terminals. The power converter includes an insulation AC/AC converter configured to convert AC power from the external circuit into AC power suitable for the secondary battery unit and convert AC power from the secondary battery unit into AC power suitable for the external circuit.

According to the electric-vehicular charge and discharge device of the fourteenth aspect in accordance with the present invention, in addition to any one of the first to thirteenth aspects, the electric vehicle includes a switch for separation of the secondary battery unit from the power supply path. The switcher is configured to, when the ground fault detector determines that a ground fault has occurred in the power supply path, control the switch to separate the secondary battery unit from the power supply path.

According to the electric-vehicular charge and discharge device of the fifteenth aspect in accordance with the present invention, in addition to the thirteenth aspect, the charge and discharge unit includes a switch for separation of the secondary battery unit from the power supply path. The switcher is configured to, when the ground fault detector determines that a ground fault has occurred in the power supply path, control the switch to separate the secondary battery unit from the power supply path.

### Brief Description of the Drawings

FIG. 1 is a block diagram illustrating the electric-vehicular charge and discharge device of the first embodiment;
FIG. 2 is a block diagram illustrating the electric-vehicular charge and discharge device of the first embodiment;
FIG. 3 is a block diagram illustrating the electric-vehicular charge and discharge device of the second embodiment;
FIG. 4 is a block diagram illustrating the electric-vehicular charge and discharge device of the second embodiment;
FIG. 5 is a block diagram illustrating the electric-vehicular charge and discharge device of the third embodiment;
FIG. 6 is a block diagram illustrating the electric-vehicular charge and discharge device of the third embodiment;
FIG. 7 is a block diagram illustrating the electric-vehicular charge and discharge device of the fourth embodiment;
FIG. 8 is a block diagram illustrating the electric-vehicular charge and discharge device of the fourth embodiment;
FIG. 9 is a block diagram illustrating the electric-vehicular charge and discharge device of the fifth embodiment;
FIG. 10 is a block diagram illustrating the electric-vehicular charge and discharge device of the fifth embodiment;
FIG. 11 is a block diagram illustrating the electric-vehicular charge and discharge device of the sixth embodiment; and
FIG. 12 is a block diagram illustrating the electric-vehicular charge and discharge device of the sixth embodiment.

### Description of Embodiments

The following detailed explanations referring drawings are made to embodiments of charge and discharge devices for electric automobiles in accordance with the present invention. Electric-vehicular charge and discharge devices according to the present invention are not limited to the charge and discharge devices for electric automobiles, but may be applicable to charge and discharge devices for electric vehicles including electric automobiles.

### (FIRST EMBODIMENT)

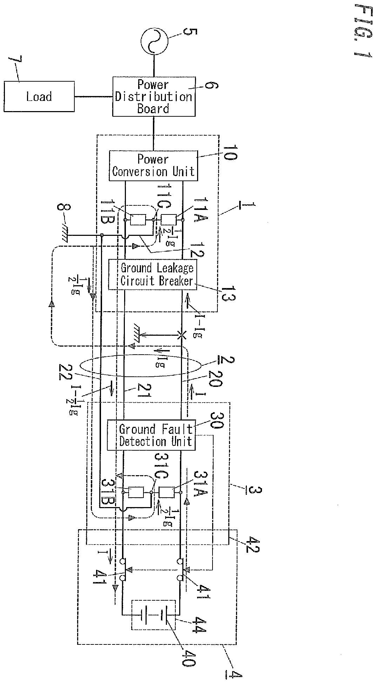

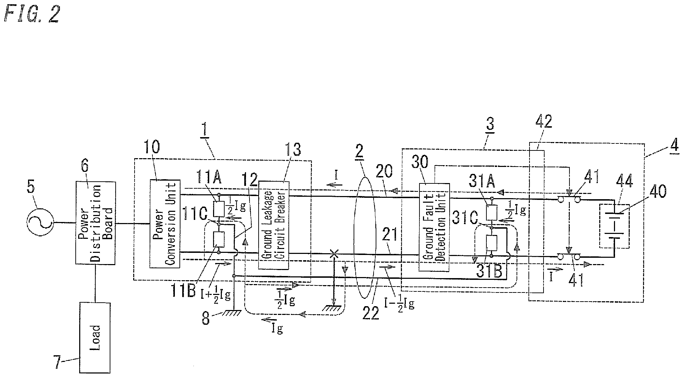

As shown in FIGS. 1 and 2, a power distribution board (e.g., a residence power distribution board) 6 is connected to an electricity system 5. A load (e.g., an electric appliance in a residence) 7 and an electric-vehicular charge and discharge device (hereinafter, referred to as "charge and discharge device") of the present embodiment are connected to the electricity system 5 via the power distribution board 6 to receive power from the electricity system 5.

As described above, the charge and discharge device of the present embodiment is connected to an external circuit (the residence power distribution board 6 and the load 7). The electricity system 5 of the present embodiment is a system for AC power supply. In summary, the external circuit is an AC circuit to be connected to an AC power source (electricity system 5).

The charge and discharge device of the present embodiment is used for charge and discharge of a secondary battery unit 44 provided to an electric vehicle (electric automobile) 4.

The secondary battery unit 44 includes a secondary battery 40. The secondary battery unit 44 further includes a pair of power terminals. The pair of power terminals are used for charge and discharge of the secondary battery unit 44. The pair of power terminals of the present embodiment are positive and negative electrodes of the secondary battery 40.

The charge and discharge device of the present embodiment includes a power converter, a grounding unit, a ground fault detector, and a switcher.

The power converter is interposed between the external circuit and the pair of power terminals of the secondary battery unit 44 of the electric vehicle (electric automobile) 4, and is configured to convert power between the external circuit and the secondary battery unit 44.

The grounding unit connects at least one of the pair of power terminals of the secondary battery unit 44 to a grounding point 8 to be connected to the power converter.

The ground fault detector determines whether a ground fault has occurred in an electric path (power supply path) between the power converter and the secondary battery unit 44.

The switcher is configured to separate the secondary battery unit 44 from the power supply path when the ground fault detector determines that a ground fault has occurred in the power supply path.

Hereinafter, the charge and discharge device of the present embodiment is described in more detail.

FIGS. 1 and 2 show that the charge and discharge device of the present embodiment includes a power conversion device 1, a cable 2, and a connector 3.

The cable 2 and the connector 3 constitute part of the electric path (power supply path) between the power converter and the secondary battery unit 44.

The power conversion device 1 includes: a power conversion unit 10 serving as the power converter; two impedance elements 11A and 11B; and a ground leakage circuit breaker 13.

The power conversion unit 10 is configured to perform bidirectional (reversible) conversion between AC power and DC power. The power conversion unit 10 converts AC power supplied from the electricity system 5 into DC power and supplies the resultant DC power to the electric automobile 4. The power conversion unit 10 converts DC power supplied from the electric automobile 4 (secondary battery 40) into AC power and supplies the resultant AC power to the load 7.

The power conversion unit 10 is configured to perform a first conversion process (charge process) to convert power (AC power in the present embodiment) from the external circuit into predetermined first power (DC power in the present embodiment) and supply the resultant first power to the pair of power terminals of the secondary battery unit 44. The power conversion unit 10 is configured to perform a second conversion process (discharge process) to convert power (DC power in the present embodiment) from the pair of power terminals of the secondary battery unit 44 into predetermined second power (AC power in the present embodiment) and supply the resultant second power to the external circuit. The first power is determined according to the specification of the secondary battery 40 of the secondary battery unit 44. The second power is determined according to the specification of the electricity system 5.

The power conversion unit 10 of the present embodiment includes an AC/DC converter configured to convert AC power from the external circuit into DC power suitable for the secondary battery unit 44 and convert DC power from the secondary battery unit 44 into AC power suitable for the external circuit.

The two impedance elements 11A and 11B are resistors having the same resistance. The two impedance elements 11A and 11B are connected in series with each other between DC side terminals of the power conversion unit 10.

A connection point 11C of the impedance elements 11A and 11B is grounded via a grounding line 12. In short, as shown in FIGS. 1 and 2, the connection point 11C is connected to the grounding point 8 by the grounding line 12.

The ground leakage circuit breaker 13 compares a DC current (outward charge current) outputted via the DC side positive terminal of the power conversion unit 10 with a DC current (return charge current) returned to the DC side negative terminal of the power conversion unit 10. When a difference between these DC currents exceeds a prescribed threshold, the ground leakage circuit breaker 13 determines that a ground leakage has occurred, and breaks the electric path.

The cable 2 is a multicore cable including: a pair of power supply lines 20 and 21 for supplying a DC current (a charge current and a discharge current); a grounding line 22 having one end grounded together with the connection point 11C of the impedance elements 11A and 11B; a communication line (not shown); and an insulating sheath (not shown) covering around these lines. The cable 2 has one end connected to the power conversion device 1 (the ground leakage circuit breaker 13) and the other end connected to the connector 3.

The connector 3 is a plug connector configured to be detachably connected to a receptacle connector 42 provided to the electric automobile 4. The connector 3 includes a ground fault detection unit 30 and impedance elements 31A and 31B. The ground fault detection unit 30 and the impedance elements 31A and 31B are housed in a casing of the connector 3.

These two impedance elements 31A and 31B are resistors having the same resistance. These two impedance elements 31A and 31B are connected in series with each other between terminals of the ground fault detection unit 30 to be connected to the electric automobile 4. The grounding line 22 of the cable 2 is connected to a connection point 31C of the impedance elements 31A and 31B. In the present embodiment, the impedance elements 31A and 31B and the grounding line 22 constitute the grounding unit.

In the charge and discharge device of the present embodiment, the grounding unit includes the two impedance elements 31A and 31B and the grounding line 22. The two impedance elements 31A and 31B have the same impedance (resistance) and are connected in series between the both electrodes of the secondary battery 40. The grounding line 22 connects the connection point 31C of the impedance elements 31A and 31B to the grounding point 8 of the power converter (power conversion unit) 10.

In other words, the grounding unit includes the grounding line 22 connecting at least one of the pair of power terminals of the secondary battery unit 44 to the grounding point 8.

Additionally, the grounding unit includes the series circuit of two impedance components (impedance elements) 31A and 31B between the pair of power terminals of the secondary battery unit 44. The grounding line 22 connects the connection point 31C of the two impedance components (impedance elements) 31A and 31B to the grounding point 8. The two impedance components (impedance elements) 31A and 31B have the same impedance.

In the present embodiment, each of the two impedance components is constituted by a single impedance element. However, each impedance component is constituted by not a single impedance element but two or more impedance elements. In brief, it is only necessary that the two impedance components have the same impedance (synthetic impedance).

The ground fault detection unit 30 measures currents individually flowing through the power supply lines 20 and 21 of the cable 2, and, when a difference between the magnitudes of the currents individually flowing through the power supply lines 20 and 21 is greater than a predetermined threshold, determines that a ground fault has occurred. In brief, the ground fault detection unit 30 is configured to, when acknowledging that a difference between the magnitudes of the current flowing through one of the pair of power terminals and another current flowing through the other of the pair of power terminals exceeds the predetermined threshold, determine that a ground fault has occurred in the power supply path.

When detecting the ground fault, the ground fault detection unit 30 opens contacts 41 and 41 respectively interposed between one electrode of the secondary battery 40 and the receptacle connector 42 and between the other electrode of the secondary battery 40 and the receptacle connector 42.

In summary, the ground fault detection unit 30 of the present embodiment serves as the ground fault detector and the switcher.

Note that, these contacts 41 and 41 are provided to the electric automobile 4 in advance for the purpose of protection of the secondary battery 40 from charging abnormality. Contacts to be controlled by the ground fault detection unit 30 may be provided to the connector 3.

In the present embodiment, the electric vehicle 4 includes the switch (contact) 41 for separation of the secondary battery unit 44 from the power supply path (in particular, the power supply lines 20 and 21 of the cable 2).

The ground fault detection unit (switcher) 30 is configured to, when determining that a ground fault has occurred in the power supply path, control the switch 41 to separate the secondary battery unit 44 from the power supply path.

Next, the operations of the charge and discharge device of the present embodiment are described below.

In the process of charging the electric automobile 4, AC power supplied from the electricity system 5 is converted into DC power by the power conversion unit 10 and the DC power is supplied to the electric automobile 4 through the cable 2 and the connector 3. Thereby, the secondary battery 40 of the electric automobile 4 is charged.

When a ground fault has occurred in the power supply line 20 or 21 of the cable 2 during charging, the magnitude of the DC current outputted from the DC side positive terminal of the power conversion unit 10 and flowing into the DC side negative terminal of the power conversion unit 10 decreases by a magnitude of the ground fault current.

Accordingly, the ground leakage circuit breaker 13 of the power conversion device 1 detects such a decrease in the DC current caused by the ground fault current, and breaks the electric path. Hence, improvement of safety in charging is achieved.

The following explanation is made to the operation of the charge and discharge device of the present embodiment in supplying from the electric automobile 4 (discharging by the secondary battery 40).

In the process of supplying electricity from the electric automobile 4, DC power discharged from the secondary battery 40 is supplied to the power conversion device 1 through the connector 3 and the cable 2 and then converted into AC power by the power conversion unit 10 of the power conversion device 1. The AC power converted by the power conversion unit 10 is supplied to the load 7 through the power distribution board 6.

For example, it is assumed that a ground fault has occurred in the power supply line 20 of the cable 2 during the process of supplying electricity from the electric automobile 4. According to this assumption, as indicated by the dashed arrow in FIG. 1, a ground fault current with the magnitude of Ig flows from the positive electrode of the secondary battery 40 to a ground fault point (X) through the power supply line 20 of the cable 2.

Further, this ground fault current with the magnitude of Ig is divided into half ground fault currents with the same magnitude of Ig/2. One of the half ground fault current with the magnitude of Ig/2 flows to the negative electrode of the secondary battery 40 through the grounding line 22 and the impedance element 31B, and the other flows to the negative electrode of the secondary battery 40 through the grounding line 12, the impedance element 11B, the ground leakage circuit breaker 13, and the power supply line 21 of the cable 2.

When a difference between the magnitude of I of the current flowing through one power supply line 20 and the magnitude of I-Ig/2 of the current flowing through the other power supply line 21, that is, the magnitude of Ig/2 of the half ground fault current is greater the predetermined threshold, the ground fault detection unit 30 determines that the ground fault has occurred, and opens the contact 41.

For example, it is assumed that a ground fault has occurred in the power supply line 21 of the cable 2 during the process of supplying electricity from the electric automobile 4. According to this assumption, as indicated by the dashed arrow in FIG. 2, a ground fault current with the magnitude of Ig flows from the negative output terminal of the power conversion device 1 to a ground fault point (X) through the power supply line 21 of the cable 2.

Further, this ground fault current with the magnitude of Ig is divided into half ground fault currents with the same magnitude of Ig/2. One of the half ground fault current with the magnitude of Ig/2 flows to the negative electrode of the secondary battery 40 through the grounding line 22 and the impedance element 31B, and the other flows to the negative electrode of the secondary battery 40 through the grounding line 12, the impedance element 11B, the ground leakage circuit breaker 13, and the power supply line 21 of the cable 2.

When a difference between the magnitude of I of the current flowing through one power supply line 20 and the magnitude of I-Ig/2 of the current flowing through the other power supply line 21, that is, the magnitude of Ig/2 of the half ground fault current is greater the predetermined threshold, the ground fault detection unit 30 determines that the ground fault has occurred, and opens the contact 41.

The charge and discharge device (electric-vehicular charge and discharge device) of the present embodiment described above is an electric-vehicular charge and discharge device configured to charge the secondary battery 40 of the electric vehicle 4 and allow the secondary battery 40 to discharge stored electric charges to supply electricity to the load 7 outside the electric vehicle 4. The charge and discharge device of the present embodiment includes: the power converter (power conversion unit 10) configured to perform bidirectional conversion between AC power and DC power; the cable 2 constituting part of the electric path (power supply path) between the power converter (power conversion unit 10) and the secondary battery 40; the grounding unit configured to connect at least one of the electrodes of the secondary battery 40 to the grounding point 8 of the power converter (power conversion unit 10); the ground fault detector (ground fault detection unit 30) which is on the DC side of the power converter (power conversion unit 10) and is configured to detect a ground fault in the electric path while DC power is supplied from the secondary battery 40 to the power converter (power conversion unit 10); and the switcher (ground fault detection unit 30) configured to open the contact 41 interposed in the electric path in response to detection of a ground fault by the ground fault detector (ground fault detection unit 30).

In other words, the charge and discharge device of the present embodiment includes the power converter (power conversion unit 10), the grounding unit, the ground fault detector (ground fault detection unit 30), and the switcher (ground fault detection unit 30). The power converter (power conversion unit 10) is interposed between the external circuit and the pair of power terminals of the secondary battery unit 44 provided to the electric vehicle 4, and is configured to convert power between the external circuit and the secondary battery unit 44. The grounding unit is configured to connect at least one of the pair of power terminals of the secondary battery unit 44 to the grounding point 8 to be connected to the power converter (power conversion unit 10). The ground fault detector (ground fault detection unit 30) is configured to determine whether a ground fault has occurred in the power supply path between the power converter (power conversion unit 10) and the secondary battery unit 44. The switcher (ground fault detection unit 30) is configured to, when the ground fault detector (ground fault detection unit 30) determines that a ground fault has occurred in the power supply path, separate the secondary battery unit 44 from the power supply path.

Further in the charge and discharge device of the present embodiment, the grounding unit (ground fault detection unit 30) is configured to, when a ground fault has occurred in the power supply path between the power converter (power conversion unit 10) and the secondary battery unit 44, connect at least one of the pair of power terminals of the secondary battery unit 44 to the grounding point 8 so as to cause a difference between a current flowing through one of the pair of power terminals and another current flowing through the other of the pair of power terminals.

Further in the charge and discharge device of the present embodiment, the grounding unit includes the grounding line 21 for connecting at least one of the pair of power terminals of the secondary battery unit 44 to the grounding point 8.

Further in the charge and discharge device of the present embodiment, the ground fault detector (ground fault detection unit 30) is configured to, when acknowledging that a difference between magnitudes of a current flowing through one of the pair of power terminals and another current flowing through the other of the pair of power terminals exceeds a predetermined threshold, determine that a ground fault has occurred in the power supply path.

Further in the charge and discharge device of the present embodiment, the power converter (power conversion unit 10) is configured to perform the first conversion process (charge process) to convert power (in the present embodiment, AC power) from the external circuit into the predetermined first power (in the present embodiment, DC power) and supply the resultant first power to the pair of power terminals of the secondary battery unit 44, and to perform the second conversion process (discharge process) to convert power (in the present embodiment, DC power) from the pair of power terminals of the secondary battery unit 44 into the predetermined second power (in the present embodiment, AC power) and supply the resultant second power to the external circuit.

Further in the charge and discharge device of the present embodiment, the external circuit is an AC circuit connected to the AC power source (electricity system 5). The secondary battery unit 44 includes the secondary battery 40. The pair of power terminals are the positive and negative electrodes of the secondary battery 40. The power converter includes the AC/DC converter configured to convert AC power from the external circuit into DC power suitable for the secondary battery unit 44 and convert DC power from the secondary battery unit 44 into AC power suitable for the external circuit.

Further in the charge and discharge device of the present embodiment, the grounding unit includes the two impedance elements 31A and 31B and the grounding line 22. The two impedance elements 31A and 31B have the same impedance and are connected in series between the electrodes of the secondary battery 40. The grounding line 22 connects the connection point 31C of the impedance elements 31A and 31B to the grounding point 8 of the power converter (power conversion unit 10).

In other words, in the charge and discharge device of the present embodiment, the grounding unit includes the series circuit of the two impedance components (impedance elements) 31A and 31B between the pair of power terminals of the secondary battery unit 44. The grounding line 22 connects the connection point 31C of the two impedance components (impedance elements) 31A and 31B to the grounding point 8. The two impedance components (impedance elements) 31A and 31B have the same impedance.

As described above, in the present embodiment, the grounding line 22 connects the connection point 31C of the impedance elements 31A and 31B is connected to the grounding point 8 of the power conversion unit 10, and the ground fault detection unit 30 provided between the power conversion unit 10 and the impedance elements 31A and 31B opens the contact 41 when detecting a ground fault occurring in at least one of the power supply lines 20 and 21 of the cable 2.

Accordingly, even while the electric automobile 4 discharges, the charge and discharge device of the present embodiment opens the contact 41 interposed in the electric path to interrupt a DC current (charge current) when detecting a ground fault in the cable 2. Consequently, it is possible to improve the safety in supply of electricity from the secondary battery 40 of the electric automobile 4 to the load 7.

As described above, the charge and discharge device of the present embodiment has an advantageous effect on improvement of the safety in supply of power from the secondary battery 40 provided to the electric vehicle 4 to the load 7 outside the electric vehicle 4.

Note that, in the present embodiment, the DC side terminals of the power conversion unit 10 are grounded by use of the impedance elements 11A and 11B with the same impedance, and the both electrodes of the secondary battery 40 are grounded by use of the impedance elements 31A and 31B with the same impedance. The DC side terminals of the power conversion unit 10 may be grounded directly without using impedance elements. The both electrodes of the secondary battery 40 may be grounded directly without using impedance elements.

However, when the grounding is made by use of the impedance elements 11A and 11B and the other impedance elements 31A and 31B, a voltage of the cable 2 to the ground can halve compared with a case in which no impedance element is used.

Further in the present embodiment, the grounding line 22 of the cable 2 constitutes the grounding unit, and the ground fault detection unit 30 serving as the ground fault detector and the impedance elements 31A and 31B constituting the grounding unit are housed in the casing of the connector 3. Thereby, the grounding unit and the ground fault detector are integrated with the cable 2.

Hence, in contrast to a case in which the electric automobile 4 includes the grounding unit and the ground fault detector, it is possible to easily achieve the improvement of the safety at lowered cost.

Note that, the ground fault detection unit 30 and the impedance elements 31A and 31B may be integrated with the cable 2 in such a manner that the ground fault detection unit 30 and the impedance elements 31A and 31B are housed in a box-shaped casing interposed in the cable 2.

Note that, the ground fault detection unit 30 serving as the ground fault detector may be integrated with the cable 2 and the impedance elements 31A and 31B constituting the grounding unit may be included in the electric automobile 4.

In the charge and discharge device of the present embodiment, the grounding unit and the ground fault detector may be integrated with the cable 2. In other words, the charge and discharge device of the present embodiment further includes the cable 2 connecting the power converter (power conversion unit 10) to the pair of power terminals of the secondary battery unit 44. The grounding unit and the ground fault detector are provided to the cable 2.

Alternatively, in the charge and discharge device of the present embodiment, the cable 2 may include the plug connector (connector) 3 to be detachably connected to the receptacle connector provided to the electric vehicle 4. The grounding unit and the ground fault detector may be integrated with the plug connector 3. In other words, the charge and discharge device of the present embodiment further includes: the cable 2 connecting the power converter (power conversion unit 10) to the pair of power terminals of the secondary battery unit 44; and the plug connector 3 configured to be detachably connected to the receptacle connector of the electric vehicle 4. The cable 2 has one end connected to the power converter (power conversion unit 10) and the other end connected to the plug connector 3. The grounding unit and the ground fault detector are provided to the plug connector 3.

Alternatively, in the charge and discharge device of the present embodiment, the cable 2 may include the plug connector (connector) 3 to be detachably connected to the receptacle connector provided to the electric vehicle 4. The ground fault detector may be integrated with the cable 2 or the plug connector 3, and the grounding unit may be included in the electric vehicle 4. In other words, the charge and discharge device of the present embodiment further includes the cable 2 connecting the power converter (power conversion unit 10) to the pair of power terminals of the secondary battery unit 44. The ground fault detector is provided to the cable 2, and the grounding unit is provided to the electric vehicle 4.

Alternatively, in the charge and discharge device of the present embodiment, the grounding unit and the ground fault detector may be included in the electric vehicle 4. In other words, in the charge and discharge device of the present embodiment, the grounding unit and the ground fault detector are provided to the electric vehicle 4.

The present embodiment utilizes the contacts 41 and 41 provided to the electric automobile 4 in advance for the purpose of protection of the secondary battery 40 from charging abnormality. Accordingly, it is possible to simplify the structure of the switcher and lower the cost of the switcher.

As described above, in the charge and discharge device of the present embodiment, the switcher (ground fault detection unit 30) is configured to open the contact 41 provided to the electric vehicle 4.

In other words, the electric vehicle 4 includes the switch (contact) 41 for separation of the secondary battery unit 44 from the power supply path. The switcher (ground fault detection unit 30) is configured to, when the ground fault detector (ground fault detection unit 30) determines that a ground fault has occurred in the power supply path, control the switch 41 to separate the secondary battery unit 44 from the power supply path.

### (SECOND EMBODIMENT)

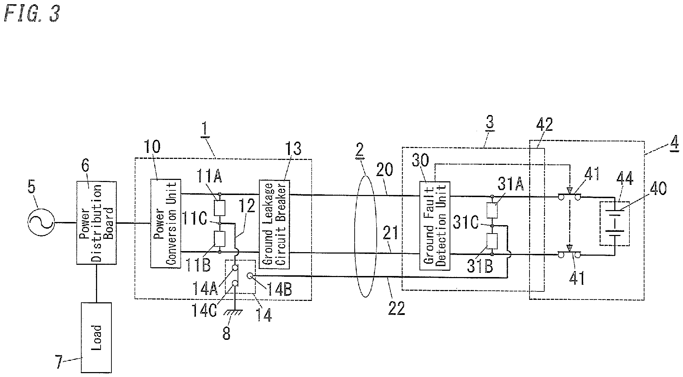

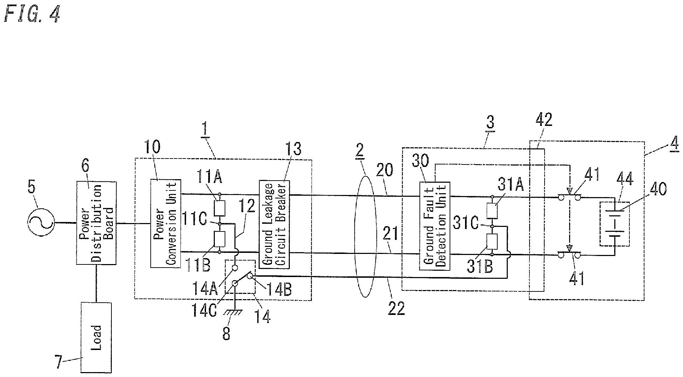

As shown in FIGS. 3 and 4, the charge and discharge device of the present embodiment includes a selector switch 14. The selector switch 14 is provided to the power conversion device 1 and is configured to ground any one of the grounding line 12 and the grounding line 22 of the cable 2. The configurations of the charge and discharge device of the present embodiment other than the selector switch 14 are the same as those of the first embodiment, and hence are designated by the same reference numerals to omit their explanations.

The selector switch 14 includes one switching contact 14A connected to the grounding line 12, the other switching contact 14B connected to the cable 2, and a common contact 14C grounded.

While the power conversion unit 10 converts AC power into DC power (the secondary battery 40 is charged), the selector switch 14 connects the common contact 14C to the switching contact 14A, thereby separating the grounding line 22 of the cable 2 from the grounding point 8 (see FIG. 3).

While the power conversion unit 10 converts DC power into AC power (the secondary battery 40 discharges), the selector switch 14 connects the common contact 14C to the switching contact 14B, thereby separating the grounding line 12 from the grounding point 8 and connecting the grounding line 22 of the cable 2 to the grounding point 8 (see FIG. 4).

As described above, the charge and discharge device of the present embodiment includes the selector (selector switch 14). The selector is configured to separate the grounding line 22 from the grounding point 8 while the secondary battery 40 is charged. Whereas, the selector is configured to connect the grounding line 22 to the grounding point 8 and separate the power converter (power conversion unit 10) from the grounding point 8 while the secondary battery 40 discharges.

In other words, the charge and discharge device of the present embodiment further includes the selector (selector switch 14). The selector is configured to separate the grounding line 22 from the grounding point 8 while the secondary battery unit 44 is charged, and to connect the grounding line 22 to the grounding point 8 and separate the power converter (power conversion unit 10) from the grounding point 8 while the secondary battery unit 44 discharges.

According to the first embodiment, the grounding line 12 and the grounding line 22 of the cable 2 are always connected to the grounding point 8. Hence, the ground fault current with the magnitude of Ig caused by a ground fault in the cable 2 is separated into currents individually flowing through the grounding lines 12 and 22. This may cause a decrease in the ground fault current flowing through the ground fault detection unit 30.

According to the present embodiment, while the secondary battery 40 discharges, the grounding line 22 is connected to the grounding point 8 and the grounding line 12 (power conversion unit 10) is separated from the grounding point 8. The ground fault current with the magnitude of Ig caused by a ground fault in the cable 2 cannot flow into the grounding line 12. Therefore, it is possible to avoid a decrease in the ground fault current flowing through the ground fault detection unit 30.

Thus, the present embodiment has an advantageous effect on improvement of ground fault detection accuracy of the ground fault detection unit 30 relative to the first embodiment. Further, while the secondary battery 40 is charged, the grounding line 22 of the cable 2 is separated from the grounding point 8 and only the grounding line 12 is connected to the grounding point 8. Also in the case of charging the secondary battery 40, the ground fault current cannot flow into the grounding line 22. Therefore, detection accuracy of the ground leakage circuit breaker 13 can be improved.

### (THIRD EMBODIMENT)

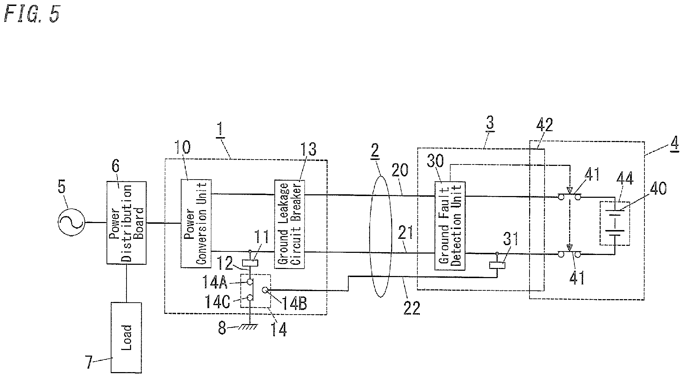

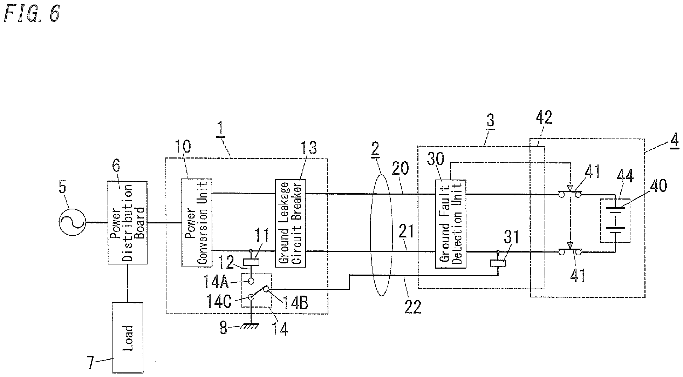

As shown in FIGS. 5 and 6, the charge and discharge device of the present embodiment includes an impedance element 11 instead of the impedance elements 11A and 11B. The impedance element 11 is between the DC side negative terminal of the power conversion unit 10 and the switching contact 14A. Further, the charge and discharge device of the present embodiment includes an impedance element 31 instead of the impedance elements 31A and 31B. The impedance element 31 is between the grounding line 22 and the negative electrode of the secondary battery 40.

In summary, only one side of each of the power conversion device 1 and the secondary battery 40 of the present embodiment is grounded. The other configurations of the present embodiment are the same as those of the second embodiment and hence are designated by the same reference numerals to omit their explanations. Note that, it is not always necessary to interpose the impedance element 11 between the grounding line 12 and the switching contact 14A, and the grounding line 12 may be directly connected to the switching contact 14A.

Also in the present embodiment, while the power conversion unit 10 converts AC power into DC power (the secondary battery 40 is charged), the selector switch 14 connects the common contact 14C to the switching contact 14A, thereby separating the grounding line 22 of the cable 2 from the grounding point 8 (see FIG. 5).

While the power conversion unit 10 converts DC power into AC power (the secondary battery 40 discharges), the selector switch 14 connects the common contact 14C to the switching contact 14B, thereby separating the grounding line 12 from the grounding point 8 and connecting the grounding line 22 of the cable 2 to the grounding point 8 (see FIG. 6).

Also in the present embodiment, while the secondary battery 40 discharges, the grounding line 22 is connected to the grounding point 8 and the grounding line 12 (power conversion unit 10) is separated from the grounding point 8. The ground fault current with the magnitude of Ig caused by a ground fault in the cable 2 cannot flow into the grounding line 12. Therefore, it is possible to avoid a decrease in the ground fault current flowing through the ground fault detection unit 30.

When the selector switch 14 is not provided and the DC side negative terminal of the power conversion unit 10 is grounded through the grounding line 12 in a similar manner to the first embodiment, a current always flows into the power supply line 21 and the grounding line 22 irrespective of occurrence of a ground fault. This may cause a difference between the magnitudes of the currents individually flowing through the power supply lines 20 and 21, and may result in false detection of a ground leakage by the ground leakage circuit breaker 13 or ground fault by the ground fault detection unit 30. Hence, when the only one side of the power conversion device 1 is grounded, the selector switch 14 is necessary for prevention of false detection by the ground leakage circuit breaker 13 and the ground fault detection unit 30.

### (FOURTH EMBODIMENT)

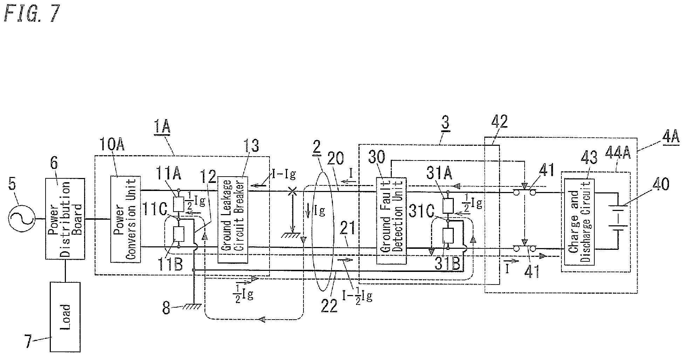

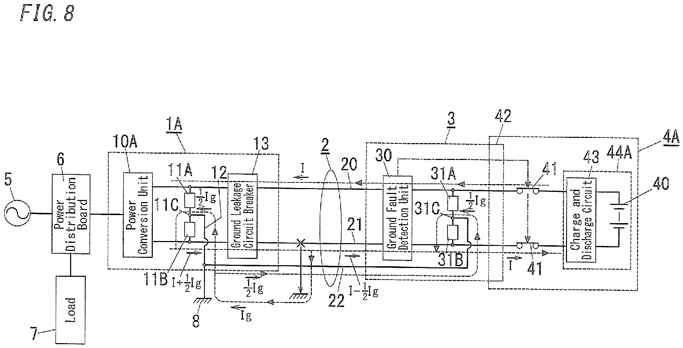

As shown in FIGS. 7 and 8, the power distribution board (e.g., the residence power distribution board) 6 is connected to the electricity system 5. The load (e.g., the electric appliance in a residence) 7 and the electric-vehicular charge and discharge device (hereinafter, referred to as "charge and discharge device") of the present embodiment are connected to the electricity system 5 via the power distribution board 6 to receive power from the electricity system 5.

The charge and discharge device of the present embodiment is used for charge and discharge of a secondary battery unit 44A provided to the electric vehicle (electric automobile) 4.

The secondary battery unit 44A includes the secondary battery 40 and a charge and discharge unit (charge and discharge circuit) 43 including a pair of power terminals.

The charge and discharge circuit 43 is configured to perform a charge process to charge the secondary battery 40 with AC power received by the pair of power terminals and to perform a discharge process to convert power (DC power) from the secondary battery 40 into AC power and output the resultant AC power from the pair of power terminals.

In the present embodiment, the electric automobile 4A includes the secondary battery 40, the charge and discharge circuit 43, the receptacle connector 42, and the pair of contacts 41 between the charge and discharge circuit 43 and the receptacle connector 42, for example.

The charge and discharge circuit 43 is configured to charge the secondary battery 40 with AC power supplied from the charge and discharge device, and to convert DC power discharged from the secondary battery 40 into AC power and output the resultant AC power to the charge and discharge device. For example, the charge and discharge circuit 43 is a bidirectional AC/DC converter.

The charge and discharge device of the present embodiment includes the power converter, the grounding unit, the ground fault detector, and the switcher.

The power converter is interposed between the external circuit and the pair of power terminals of the secondary battery unit 44A of the electric vehicle (electric automobile) 4A, and is configured to convert power between the external circuit and the secondary battery unit 44A.

The grounding unit connects at least one of the pair of power terminals of the secondary battery unit 44A to a grounding point 8 to be connected to the power converter.

The ground fault detector determines whether a ground fault has occurred in the power supply path between the power converter and the secondary battery unit 44A.

The switcher is configured to separate the secondary battery unit 44A from the power supply path when the ground fault detector determines that a ground fault has occurred in the power supply path.

Hereinafter, the charge and discharge device of the present embodiment is described in more detail.

FIGS. 7 and 8 show that the charge and discharge device of the present embodiment includes a power conversion device 1A, the cable 2, and the connector 3.

The cable 2 and the connector 3 constitute part of the electric path (power supply path) between the power converter and the secondary battery unit 44A.

The power conversion device 1A includes: a power conversion unit 10A serving as the power converter; the two impedance elements 11A and 11B; and the ground leakage circuit breaker 13.

The power conversion unit 10A is an insulation transformer or a bidirectional insulation AC/AC converter, for example. The power conversion unit 10A electrically insulates a circuit on an electricity system side (a power distribution board 6 side of the power conversion unit 10A) and a circuit on non-electricity system side (an electric automobile side of the power conversion unit 10A) from each other, and supplies AC power between these circuits in a bidirectional manner.

The power conversion unit 10A is configured to perform a first conversion process (charge process) to convert power (AC power in the present embodiment) from the external circuit into predetermined first power (AC power in the present embodiment) and supply the resultant first power to the pair of power terminals of the secondary battery unit 44A. The power conversion unit 10A is configured to perform a second conversion process (discharge process) to convert power (AC power in the present embodiment) from the pair of power terminals of the secondary battery unit 44A into predetermined second power (AC power in the present embodiment) and supply the resultant second power to the external circuit. The first power is determined according to the specification of the charge and discharge circuit 43 of the secondary battery unit 44A. The second power is determined according to the specification of the electricity system 5.

The power conversion unit 10A of the present embodiment includes an insulation AC/AC converter configured to convert AC power from the external circuit into AC power suitable for the secondary battery unit 44A and convert AC power from the secondary battery unit 44A into AC power suitable for the external circuit.

The two impedance elements 11A and 11B are resistors having the same resistance. The two impedance elements 11A and 11B are connected in series with each other between the non-electricity system side terminals of the power conversion unit 10A.

The connection point 11C of the impedance elements 11A and 11B is grounded via the grounding line 12. In short, as shown in FIGS. 7 and 8, the connection point 11C is connected to the grounding point 8 by the grounding line 12.

The ground leakage circuit breaker 13 compares a current (outward charge current) outputted via a first terminal of the non-electricity system side terminals of the power conversion unit 10A with a current (return charge current) returned to a second terminal of the non-electricity system side terminals of the power conversion unit 10A. When a difference between these currents exceeds a prescribed threshold, the ground leakage circuit breaker 13 determines that a ground leakage has occurred, and breaks the electric path.

The cable 2 is a multicore cable including: the pair of power supply lines 20 and 21 for supplying a current (a charge current and a discharge current); the grounding line 22 having one end grounded together with the connection point 11C of the impedance elements 11A and 11B; the communication line (not shown); and the insulating sheath (not shown) covering around these lines. The cable 2 has one end connected to the power conversion device 1 (the ground leakage circuit breaker 13) and the other end connected to the connector 3.

The connector 3 is a plug connector configured to be detachably connected to a receptacle connector 42 provided to the electric automobile 4A. The connector 3 includes a ground fault detection unit 30 and impedance elements 31A and 31B. The ground fault detection unit 30 and the impedance elements 31A and 31B are housed in the casing of the connector 3.

These two impedance elements 31A and 31B are resistors having the same resistance. These two impedance elements 31A and 31B are connected in series with each other between terminals of the ground fault detection unit 30 to be connected to the electric automobile 4A. The grounding line 22 of the cable 2 is connected to a connection point 31C of the impedance elements 31A and 31B. In the present embodiment, the impedance elements 31A and 31B and the grounding line 22 constitute the grounding unit.

In the charge and discharge device of the present embodiment, the grounding unit includes the two impedance elements 31A and 31B and the grounding line 22. The two impedance elements 31A and 31B have the same impedance (resistance) and are connected in series between the both electrodes of the secondary battery 40. The grounding line 22 connects the connection point 31C of the impedance elements 31A and 31B to the grounding point 8 of the power converter (power conversion unit 10A).

In other words, the grounding unit includes the grounding line 22 connecting at least one of the pair of power terminals of the secondary battery unit 44A to the grounding point 8.

Additionally, the grounding unit includes the series circuit of two impedance components (impedance elements) 31A and 31B between the pair of power terminals of the secondary battery unit 44A. The grounding line 22 connects the connection point 31C of the two impedance components (impedance elements) 31A and 31B to the grounding point 8. The two impedance components (impedance elements) 31A and 31B have the same impedance.

In the present embodiment, each of the two impedance components is constituted by a single impedance element. However, each impedance component is constituted by not a single impedance element but two or more impedance elements. In brief, it is only necessary that the two impedance components have the same impedance (synthetic impedance).

The ground fault detection unit 30 measures currents individually flowing through the power supply lines 20 and 21 of the cable 2, and, when a difference between the magnitudes of the currents individually flowing through the power supply lines 20 and 21 is greater than a predetermined threshold, determines that a ground fault has occurred. In brief, the ground fault detection unit 30 is configured to, when acknowledging that a difference between the magnitudes of the current flowing through one of the pair of power terminals and another current flowing through the other of the pair of power terminals exceeds the predetermined threshold, determine that a ground fault has occurred in the power supply path.

When detecting the ground fault, the ground fault detection unit 30 opens contacts 41 and 41 respectively interposed between one electrode of the secondary battery 40 and the receptacle connector 42 and between the other electrode of the secondary battery 40 and the receptacle connector 42.

In summary, the ground fault detection unit 30 of the present embodiment serves as the ground fault detector and the switcher.

Note that, these contacts 41 and 41 are provided to the electric automobile 4A in advance for the purpose of protection of the secondary battery 40 from charging abnormality. Contacts to be controlled by the ground fault detection unit 30 may be provided to the connector 3.

In the present embodiment, the electric vehicle 4A includes the switch (contact) 41 for separation of the secondary battery unit 44A from the power supply path (in particular, the power supply lines 20 and 21 of the cable 2).

The ground fault detection unit (switcher) 30 is configured to, when determining that a ground fault has occurred in the power supply path, control the switch 41 to separate the secondary battery unit 44A from the power supply path.

Next, the operations of the charge and discharge device of the present embodiment are described below.

In the process of charging the electric automobile 4A, AC power supplied from the electricity system 5 is transferred to the electric automobile 4A through the cable 2 and the connector 3. Thereby, the charge and discharge circuit 43 of the electric automobile 4A charges the secondary battery 40.

When a ground fault has occurred in the power supply line 20 or 21 of the cable 2 during charging, the magnitude of the current outputted from the first terminal of the non-electricity system side terminals of the power conversion unit 10A and flowing into the second terminal of the non-electricity system side terminals of the power conversion unit 10A decreases by a magnitude of the ground fault current.

Accordingly, the ground leakage circuit breaker 13 of the power conversion device 1A detects such a decrease in the current caused by the ground fault current (i.e., an unbalance between the outward and return currents), and breaks the electric path. Hence, improvement of safety in charging is achieved.

The following explanation is made to the operation of the charge and discharge device of the present embodiment in supplying from the electric automobile 4A (discharging by the secondary battery 40).

In the process of supplying electricity from the electric automobile 4A, DC power discharged from the secondary battery 40 is converted into AC power by the charge and discharge circuit 43 and the resultant AC power is supplied to the load 7 through the connector 3, the cable 2, and the power conversion device 1A.

For example, it is assumed that a ground fault has occurred in the power supply line 20 of the cable 2 during the process of supplying electricity from the electric automobile 4A. According to this assumption, as indicated by the dashed arrow in FIG. 7, a ground fault current with the magnitude of Ig flows from the first terminal (upper terminal in the same drawing) of the charge and discharge circuit 43 to a ground fault point (X) through the power supply line 20 of the cable 2.

Further, this ground fault current with the magnitude of Ig is divided into half ground fault currents with the same magnitude of Ig/2. One of the half ground fault current with the magnitude of Ig/2 flows to the second terminal (lower terminal in the same drawing) of the charge and discharge circuit 43 through the grounding line 22 and the impedance element 31B, and the other flows to the second terminal of the charge and discharge circuit 43 through the grounding line 12, the impedance element 11B, the ground leakage circuit breaker 13, and the power supply line 21 of the cable 2.

When a difference between the magnitude of I of the current flowing through one power supply line 20 and the magnitude of I-Ig/2 of the current flowing through the other power supply line 21, that is, the magnitude of Ig/2 of the half ground fault current is greater the predetermined threshold, the ground fault detection unit 30 determines that the ground fault has occurred, and opens the contact 41.

For example, it is assumed that a ground fault has occurred in the power supply line 21 of the cable 2 during the process of supplying electricity from the electric automobile 4A. According to this assumption, as indicated by the dashed arrow in FIG. 8, a ground fault current with the magnitude of Ig flows from one output terminal (lower terminal in the same drawing) of the power conversion device 1A to a ground fault point (X) through the power supply line 21 of the cable 2.

Further, this ground fault current with the magnitude of Ig is divided into half ground fault currents with the same magnitude of Ig/2. One of the half ground fault current with the magnitude of Ig/2 flows to the second terminal of the charge and discharge circuit 43 through the grounding line 22 and the impedance element 31B, and the other flows to the second terminal of the charge and discharge circuit 43 through the grounding line 12, the impedance element 11B, the ground leakage circuit breaker 13, and the power supply line 21 of the cable 2.

When a difference between the magnitude of I of the current flowing through one power supply line 20 and the magnitude of I-Ig/2 of the current flowing through the other power supply line 21, that is, the magnitude of Ig/2 of the half ground fault current is greater the predetermined threshold, the ground fault detection unit 30 determines that the ground fault has occurred, and opens the contact 41.

The charge and discharge device (electric-vehicular charge and discharge device) of the present embodiment described above is an electric-vehicular charge and discharge device suitable for the electric vehicle 4A. The electric vehicle 4A includes the secondary battery 40 and the charge and discharge unit (charge and discharge circuit) 43. The charge and discharge unit (charge and discharge circuit) 43 is configured to perform bidirectional conversion between AC power and DC power to charge the secondary battery 40 and to allow the secondary battery 40 to discharge. The electric-vehicular charge and discharge device suitable for the electric vehicle 4A is configured to supply AC power to the charge and discharge circuit 43, and is configured to receive AC power outputted from the charge and discharge unit (charge and discharge circuit 43) and supply the received AC power to the load 7 outside the electric vehicle 4A. The charge and discharge device of the present embodiment includes: the insulation-type power converter (power conversion unit 10A) connected to the AC electricity system 5 and configured to perform bidirectional conversion of power; the cable 2 constituting part of the electric path between the power converter (power conversion unit 10A) and the charge and discharge unit (charge and discharge circuit 43); the grounding unit configured to connect at least one of the terminals of the charge and discharge unit (charge and discharge circuit 43) to the grounding point 8 of the power converter (power conversion unit 10A); the ground fault detector (ground fault detection unit 30) which is on the non-electricity system side of the power converter (power conversion unit 10A) and is configured to detect a ground fault in the electric path while AC power is supplied from the charge and discharge unit (charge and discharge circuit 43) to the power converter (power conversion unit 10A); and the switcher (ground fault detection unit 30) configured to open the contact 41 interposed in the electric path in response to detection of a ground fault by the ground fault detector (ground fault detection unit 30).

In other words, the charge and discharge device of the present embodiment includes the power converter (power conversion unit 10A), the grounding unit, the ground fault detector (ground fault detection unit 30), and the switcher (ground fault detection unit 30). The power converter (power conversion unit 10A) is interposed between the external circuit and the pair of power terminals of the secondary battery unit 44A provided to the electric vehicle 4, and is configured to convert power between the external circuit and the secondary battery unit 44A. The grounding unit is configured to connect at least one of the pair of power terminals of the secondary battery unit 44A to the grounding point 8 to be connected to the power converter (power conversion unit 10A). The ground fault detector (ground fault detection unit 30) is configured to determine whether a ground fault has occurred in the power supply path between the power converter (power conversion unit 10A) and the secondary battery unit 44A. The switcher (ground fault detection unit 30) is configured to, when the ground fault detector (ground fault detection unit 30) determines that a ground fault has occurred in the power supply path, separate the secondary battery unit 44A from the power supply path.

Further in the charge and discharge device of the present embodiment, the grounding unit (ground fault detection unit 30) is configured to, when a ground fault has occurred in the power supply path between the power converter (power conversion unit 10A) and the secondary battery unit 44A, connect at least one of the pair of power terminals of the secondary battery unit 44A to the grounding point 8 so as to cause a difference between a current flowing through one of the pair of power terminals and another current flowing through the other of the pair of power terminals.

Further in the charge and discharge device of the present embodiment, the grounding unit includes the grounding line 22 for connecting at least one of the pair of power terminals of the secondary battery unit 44A to the grounding point 8.

Further in the charge and discharge device of the present embodiment, the ground fault detector (ground fault detection unit 30) is configured to, when acknowledging that a difference between magnitudes of a current flowing through one of the pair of power terminals and another current flowing through the other of the pair of power terminals exceeds a predetermined threshold, determine that a ground fault has occurred in the power supply path.

Further in the charge and discharge device of the present embodiment, the power converter (power conversion unit 10A) is configured to perform the first conversion process (charge process) to convert power (in the present embodiment, AC power) from the external circuit into the predetermined first power (in the present embodiment, AC power) and supply the resultant first power to the pair of power terminals of the secondary battery unit 44A, and to perform the second conversion process (discharge process) to convert power (in the present embodiment, AC power) from the pair of power terminals of the secondary battery unit 44A into the predetermined second power (in the present embodiment, AC power) and supply the resultant second power to the external circuit.

Further in the charge and discharge device of the present embodiment, the external circuit is an AC circuit connected to the AC power source (electricity system 5). The secondary battery unit 44A includes the secondary battery 40 and the charge and discharge unit (charge and discharge circuit 43) including the pair of power terminals. The charge and discharge unit (charge and discharge circuit 43) is configured to perform the charge process to charge the secondary battery 40 with AC power received by the pair of power terminals and to perform the discharge process to convert power from the secondary battery 40 into AC power and output the resultant AC power from the pair of power terminals. The power converter 10A includes the insulation AC/AC converter configured to convert AC power from the external circuit into AC power suitable for the secondary battery unit 44A and convert AC power from the secondary battery unit 44A into AC power suitable for the external circuit.

Further in the charge and discharge device of the present embodiment, the grounding unit includes the two impedance elements 31A and 31B and the grounding line 22. The two impedance elements 31A and 31B have the same impedance (resistance) and are connected in series between the both terminals of the charge and discharge unit (charge and discharge circuit 43). The grounding line 22 connects the connection point 31C of the impedance elements 31A and 31B to the grounding point 8 of the power converter (power conversion unit 10A).

In other words, in the charge and discharge device of the present embodiment, the grounding unit includes the series circuit of the two impedance components (impedance elements) 31A and 31B between the pair of power terminals of the secondary battery unit 44A. The grounding line 22 connects the connection point 31C of the two impedance components (impedance elements) 31A and 31B to the grounding point 8. The two impedance components (impedance elements) 31A and 31B have the same impedance.

As described above, in the present embodiment, the grounding line 22 connects the connection point 31C of the impedance elements 31A and 31B is connected to the grounding point 8 of the power conversion unit 10A, and the ground fault detection unit 30 provided between the power conversion unit 10A and the impedance elements 31A and 31B opens the contact 41 when detecting a ground fault occurring in at least one of the power supply lines 20 and 21 of the cable 2.

Accordingly, even while the electric automobile 4A discharges, the charge and discharge device of the present embodiment opens the contact 41 interposed in the electric path to interrupt a current (charge current) when detecting a ground fault in the cable 2. Consequently, it is possible to improve the safety in supply of electricity from the secondary battery 40 of the electric automobile 4A to the load 7.

As described above, the charge and discharge device of the present embodiment has an advantageous effect on improvement of the safety in supply of power from the secondary battery 40 provided to the electric vehicle 4A to the load 7 outside the electric vehicle 4A.

Note that, in the present embodiment, the non-electricity system side terminals of the power conversion unit 10A are grounded by use of the impedance elements 11A and 11B with the same impedance, and the both terminals of the secondary battery 40 (charge and discharge circuit 43) are grounded by use of the impedance elements 31A and 31B with the same impedance. The non-electricity system side terminals of the power conversion unit 10 may be grounded directly without using impedance elements. The both terminals of the secondary battery 40 (charge and discharge circuit 43) may be grounded directly without using impedance elements.

However, when the grounding is made by use of the impedance elements 11A and 11B and the other impedance elements 31A and 31B, a voltage of the cable 2 to the ground can halve compared with a case in which no impedance element is used.

Further in the present embodiment, the grounding line 22 of the cable 2 constitutes the grounding unit, and the ground fault detection unit 30 serving as the ground fault detector and the impedance elements 31A and 31B constituting the grounding unit are housed in the casing of the connector 3. Thereby, the grounding unit and the ground fault detector are integrated with the cable 2.

Hence, in contrast to a case in which the electric automobile 4A includes the grounding unit and the ground fault detector, it is possible to easily achieve the improvement of the safety at lowered cost.

Note that, the ground fault detection unit 30 and the impedance elements 31A and 31B may be integrated with the cable 2 in such a manner that the ground fault detection unit 30 and the impedance elements 31A and 31B are housed in a box-shaped casing interposed in the cable 2.

Note that, the ground fault detection unit 30 serving as the ground fault detector may be integrated with the cable 2 and the impedance elements 31A and 31B constituting the grounding unit may be included in the electric automobile 4A.

In the charge and discharge device of the present embodiment, the grounding unit and the ground fault detector may be integrated with the cable 2. In other words, the charge and discharge device of the present embodiment further includes the cable 2 connecting the power converter (power conversion unit 10A) to the pair of power terminals of the secondary battery unit 44A. The grounding unit and the ground fault detector are provided to the cable 2.

Alternatively, in the charge and discharge device of the present embodiment, the cable 2 may include the plug connector (connector) 3 to be detachably connected to the receptacle connector provided to the electric vehicle 4A. The grounding unit and the ground fault detector may be integrated with the plug connector 3. In other words, the charge and discharge device of the present embodiment further includes: the cable 2 connecting the power converter (power conversion unit 10A) to the pair of power terminals of the secondary battery unit 44A; and the plug connector 3 configured to be detachably connected to the receptacle connector of the electric vehicle 4A. The cable 2 has one end connected to the power converter (power conversion unit 10A) and the other end connected to the plug connector 3. The grounding unit and the ground fault detector are provided to the plug connector 3.

Alternatively, in the charge and discharge device of the present embodiment, the cable 2 may include the plug connector (connector) 3 to be detachably connected to the receptacle connector provided to the electric vehicle 4a. The ground fault detector may be integrated with the cable 2 or the plug connector 3, and the grounding unit may be included in the electric vehicle 4A. In other words, the charge and discharge device of the present embodiment further includes the cable 2 connecting the power converter (power conversion unit 10A) to the pair of power terminals of the secondary battery unit 44A. The ground fault detector is provided to the cable 2, and the grounding unit is provided to the electric vehicle 4A.

Alternatively, in the charge and discharge device of the present embodiment, the grounding unit and the ground fault detector may be included in the electric vehicle 4A. In other words, in the charge and discharge device of the present embodiment, the grounding unit and the ground fault detector are provided to the electric vehicle 4A.

The present embodiment utilizes the contacts 41 and 41 provided to the electric automobile 4A in advance for the purpose of protection of the secondary battery 40 from charging abnormality. Accordingly, it is possible to simplify the structure of the switcher and lower the cost of the switcher. Note that, instead of the contacts 41 and 41, the charge and discharge circuit 43 of the electric automobile 4A may be configured to separate the secondary battery 40 from the power supply lines 20 and 21.

As described above, in the charge and discharge device of the present embodiment, the switcher (ground fault detection unit 30) is configured to open the contact 41 provided to the electric vehicle 4A.

In other words, the electric vehicle 4A includes the switch (contact) 41 for separation of the secondary battery unit 44A from the power supply path. The switcher (ground fault detection unit 30) is configured to, when the ground fault detector (ground fault detection unit 30) determines that a ground fault has occurred in the power supply path, control the switch 41 to separate the secondary battery unit 44A from the power supply path.

Alternatively, the switcher (ground fault detection unit 30) may be configured to open a contact (not shown) of the charge and discharge unit (charge and discharge circuit 43).

In other words, the charge and discharge unit (charge and discharge circuit 43) includes the switch (not shown) for separation of the secondary battery 40 from the power supply path. The switcher (ground fault detection unit 30) is configured to, when the ground fault detector (ground fault detection unit 30) determines that a ground fault has occurred in the power supply path, control the switch of the charge and discharge unit (charge and discharge circuit 43) to separate the secondary battery 40 from the power supply path.

### (FIFTH EMBODIMENT)

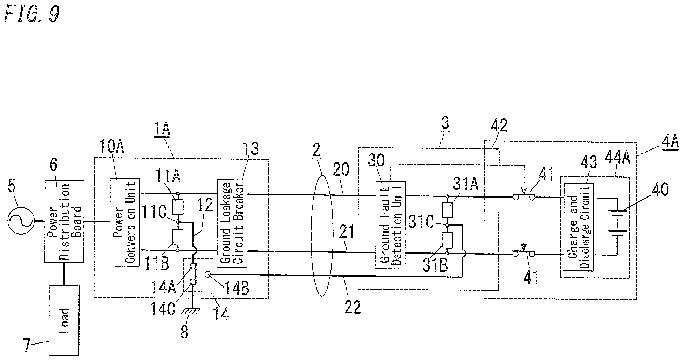

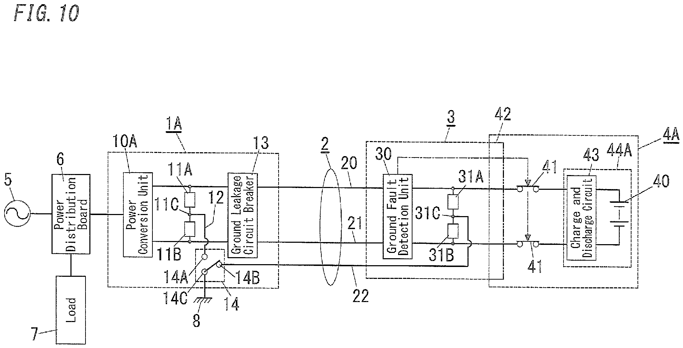

As shown in FIGS. 9 and 10, the charge and discharge device of the present embodiment includes the selector switch 14. The selector switch 14 is provided to the power conversion device 1A and is configured to ground any one of the grounding line 12 and the grounding line 22 of the cable 2. The configurations of the charge and discharge device of the present embodiment other than the selector switch 14 are the same as those of the fourth embodiment, and hence are designated by the same reference numerals to omit their explanations.

The selector switch 14 includes one switching contact 14A connected to the grounding line 12, the other switching contact 14B connected to the cable 2, and a common contact 14C grounded.

While the secondary battery 40 is charged, the selector switch 14 connects the common contact 14C to the switching contact 14A, thereby separating the grounding line 22 of the cable 2 from the grounding point 8 (see FIG. 9).

While the secondary battery 40 discharges, the selector switch 14 connects the common contact 14C to the switching contact 14B, thereby separating the grounding line 12 from the grounding point 8 and connecting the grounding line 22 of the cable 2 to the grounding point 8 (see FIG. 10).

As described above, the charge and discharge device of the present embodiment includes the selector (selector switch 14). The selector is configured to separate the grounding line 22 from the grounding point 8 while the secondary battery 40 is charged. Whereas, the selector is configured to connect the grounding line 22 to the grounding point 8 and separate the power converter (power conversion unit 10A) from the grounding point 8 while the secondary battery 40 discharges.

In other words, the charge and discharge device of the present embodiment further includes the selector (selector switch 14). The selector is configured to separate the grounding line 22 from the grounding point 8 while the secondary battery unit 44A is charged, and to connect the grounding line 22 to the grounding point 8 and separate the power converter (power conversion unit 10A) from the grounding point 8 while the secondary battery unit 44A discharges.

According to the fourth embodiment, the grounding line 12 and the grounding line 22 of the cable 2 are always connected to the grounding point 8. Hence, the ground fault current with the magnitude of Ig caused by a ground fault in the cable 2 is separated into currents individually flowing through the grounding lines 12 and 22. This may cause a decrease in the ground fault current flowing through the ground fault detection unit 30.

According to the present embodiment, while the secondary battery 40 discharges, the grounding line 22 is connected to the grounding point 8 and the grounding line 12 (power conversion unit 10A) is separated from the grounding point 8. The ground fault current with the magnitude of Ig caused by a ground fault in the cable 2 cannot flow into the grounding line 12. Therefore, it is possible to avoid a decrease in the ground fault current flowing through the ground fault detection unit 30.

Thus, the present embodiment has an advantageous effect on improvement of ground fault detection accuracy of the ground fault detection unit 30 relative to the fourth embodiment. Further, while the secondary battery 40 is charged, the grounding line 22 of the cable 2 is separated from the grounding point 8 and only the grounding line 12 is connected to the grounding point 8. Also in the case of charging the secondary battery 40, the ground fault current cannot flow into the grounding line 22. Therefore, detection accuracy of the ground leakage circuit breaker 13 can be improved.

### (SIXTH EMBODIMENT)

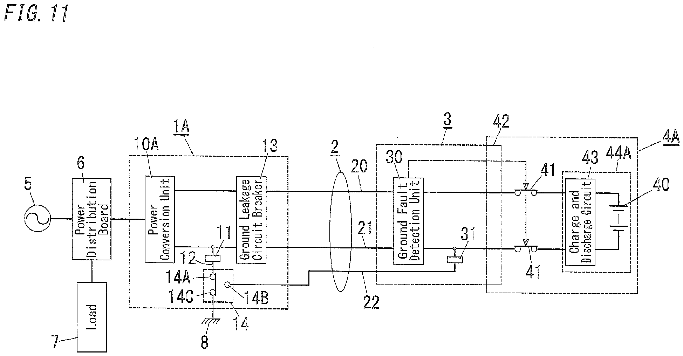

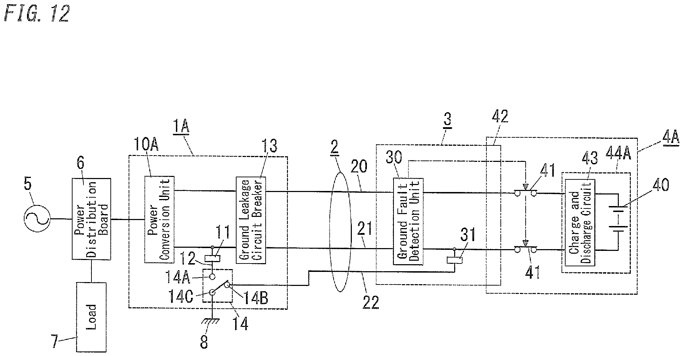

As shown in FIGS. 11 and 12, the charge and discharge device of the present embodiment includes the impedance element 11 instead of the impedance elements 11A and 11B. The impedance element 11 is between the second terminal of the non-electricity system side terminals of the power conversion unit 10A and the switching contact 14A. Further, the charge and discharge device of the present embodiment includes the impedance element 31 instead of the impedance elements 31A and 31B. The impedance element 31 is between the grounding line 22 and the second terminal of the charge and discharge circuit 43.

In summary, only one side of each of the power conversion device 1A and the secondary battery 40 of the present embodiment is grounded. The other configurations of the present embodiment are the same as those of the fifth embodiment and hence are designated by the same reference numerals to omit their explanations. Note that, it is not always necessary to interpose the impedance element 11 between the grounding line 12 and the switching contact 14A, and the grounding line 12 may be directly connected to the switching contact 14A.

Also in the present embodiment, while the secondary battery 40 is charged, the selector switch 14 connects the common contact 14C to the switching contact 14A, thereby separating the grounding line 22 of the cable 2 from the grounding point 8 (see FIG. 11).

While the secondary battery 40 discharges, the selector switch 14 connects the common contact 14C to the switching contact 14B, thereby separating the grounding line 12 from the grounding point 8 and connecting the grounding line 22 of the cable 2 to the grounding point 8 (see FIG. 12).

Also in the present embodiment, while the secondary battery 40 discharges, the grounding line 22 is connected to the grounding point 8 and the grounding line 12 (power conversion unit 10A) is separated from the grounding point 8. The ground fault current with the magnitude of Ig caused by a ground fault in the cable 2 cannot flow into the grounding line 12. Therefore, it is possible to avoid a decrease in the ground fault current flowing through the ground fault detection unit 30.

When the selector switch 14 is not provided and one of the non-electricity system side terminals of the power conversion unit 10 is grounded through the grounding line 12 in a similar manner to the fourth embodiment, a current is always flows into the power supply line 21 and the grounding line 22 irrespective of occurrence of a ground fault. This may cause a difference between the magnitudes of the currents individually flowing through the power supply lines 20 and 21, and may result in false detection of a ground leakage by the ground leakage circuit breaker 13 or ground fault by the ground fault detection unit 30. Hence, when the only one side of the power conversion device 1A is grounded, the selector switch 14 is necessary for prevention of false detection by the ground leakage circuit breaker 13 and the ground fault detection unit 30.

## Claims

1. An electric-vehicular charge and discharge device, comprising:
a power converter (10) interposed between an external circuit and a pair of power terminals of a secondary battery unit (44) provided to an electric vehicle (4) and
configured to convert power between the external circuit and the secondary battery unit (44);
a grounding unit (30) configured to connect at least one of the pair of power terminals of the secondary battery unit (44) to a grounding point (8) to be connected to the power converter (10);
a ground fault detector (30) configured to determine whether a ground fault has occurred in a power supply path between the power converter (10) and the secondary battery unit (44); and
a switcher (30) configured to, when the ground fault detector (30) determines that a ground fault has occurred in the power supply path, separate the secondary battery unit (44) from the power supply path,
**characterized in that**
the grounding unit (30) including a grounding line (22) for connecting at least one of the pair of power terminals of the secondary battery unit (44) to the grounding point (8), and
the electric-vehicular charge and discharge device further comprising a selector (14) configured to separate the grounding line (22) from the grounding point (8) while the secondary battery unit (44) is charged, and to connect the grounding line (22) to the grounding point (8) and separate the power converter (10) from the grounding point (8) while the secondary battery unit (44) discharges.

2. The electric-vehicular charge and discharge device according to claim 1, wherein the grounding unit (30) is configured to, when a ground fault has occurred in the power supply path, connect at least one of the pair of power terminals of the secondary battery unit (44) to the grounding point (8) so as to cause a difference between a current flowing through one of the pair of power terminals and another current flowing through the other of the pair of power terminals.

3. The electric-vehicular charge and discharge device according to claim 1, wherein:
the grounding unit (30) includes a series circuit of two impedance components (31A, 31B) between the pair of power terminals of the secondary battery unit (44);
the grounding line (22) connects a connection point of the two impedance components (31A, 31B) to the grounding point (8); and
the two impedance components (31A, 31B) have the same impedance.

4. The electric-vehicular charge and discharge device according to claim 1, further comprising a cable (2) connecting the power converter (10) to the pair of power terminals of the secondary battery unit (44),
the grounding unit (30) and the ground fault detector (30) being provided to the cable (2).

5. The electric-vehicular charge and discharge device according to claim 1, further comprising:
a cable (2) connecting the power converter (10) to the pair of power terminals of the secondary battery unit (44); and
a plug connector (3) configured to be detachably connected to a receptacle connector of the electric vehicle (4),
the cable (2) having one end connected to the power converter (10) and the other end connected to the plug connector (3), and
the grounding unit (30) and the ground fault detector (30) being provided to the plug connector (3).

6. The electric-vehicular charge and discharge device according to claim 1, further comprising a cable (2) connecting the power converter (10) to the pair of power terminals of the secondary battery unit (44),
the ground fault detector (30) being provided to the cable (2), and
the grounding unit (30) being provided to the electric vehicle (4).

7. The electric-vehicular charge and discharge device according to claim 1, wherein the grounding unit (30) and the ground fault detector (30) are provided to the electric vehicle (4).

8. The electric-vehicular charge and discharge device according to claim 1, wherein the ground fault detector (30) is configured to, when acknowledging that a difference between magnitudes of a current flowing through one of the pair of power terminals and another current flowing through the other of the pair of power terminals exceeds a predetermined threshold, determine that a ground fault has occurred in the power supply path.

9. The electric-vehicular charge and discharge device according to claim 1, wherein the power converter (10) is configured to perform a first conversion process to convert power from the external circuit into predetermined first power and supply the resultant first power to the pair of power terminals of the secondary battery unit (44), and to perform a second conversion process to convert power from the pair of power terminals of the secondary battery unit (44) into predetermined second power and supply the resultant second power to the external circuit.

10. The electric-vehicular charge and discharge device according to claim 1, wherein:
the external circuit is an AC circuit connected to an AC power source (5);
the secondary battery unit (44) includes a secondary battery (40);
the pair of power terminals are positive and negative electrodes of the secondary battery (40); and
the power converter (10) includes an AC/DC converter configured to convert AC power from the external circuit into DC power suitable for the secondary battery unit (44) and convert DC power from the secondary battery unit (44) into AC power suitable for the external circuit.

11. The electric-vehicular charge and discharge device according to claim 1, wherein:
the external circuit is an AC circuit connected to an AC power source (5);
the secondary battery unit (44) includes a secondary battery (40) and a charge and discharge unit including the pair of power terminals;
the charge and discharge unit is configured to perform a charge process to charge the secondary battery (40) with AC power received by the pair of power terminals and to perform a discharge process to convert power from the secondary battery (40) into AC power and output the resultant AC power from the pair of power terminals; and
the power converter (10) includes an insulation AC/AC converter configured to convert AC power from the external circuit into AC power suitable for the secondary battery unit (44) and convert AC power from the secondary battery unit (44) into AC power suitable for the external circuit.

12. The electric-vehicular charge and discharge device according to claim 1, wherein:
the electric vehicle (4) includes a switch (41) for separation of the secondary battery unit (44) from the power supply path; and
the switcher (30) is configured to, when the ground fault detector (30) determines that a ground fault has occurred in the power supply path, control the switch (41) to separate the secondary battery unit (44) from the power supply path.

13. The electric-vehicular charge and discharge device according to claim 11, wherein:
the charge and discharge unit includes a switch (41) for separation of the secondary battery unit (44) from the power supply path; and
the switcher (30) is configured to, when the ground fault detector (30) determines that a ground fault has occurred in the power supply path, control the switch to separate the secondary battery unit (44) from the power supply path.

## Patentansprüche

1. Lade- und Entladevorrichtung für ein Elektrofahrzeug, umfassend:
einen Energiewandler (10), der zwischen einer externen Schaltung und einem Paar von Energieanschlüssen einer sekundären Batterieeinheit (44) eingesetzt ist, die an einem Elektrofahrzeug (4) bereitgestellt ist, und ausgebildet ist, Energie zwischen der externen Schaltung und der sekundären Batterieeinheit (44) umzuwandeln;
eine Erdungseinheit (30), die für eine Verbindung von mindestens einem des Paares von Energieanschlüssen der sekundären Batterieeinheit (44) an einen Erdungspunkt (8) ausgebildet ist, der mit einem Energiewandler (10) verbunden werden soll;
einen Erdschlussdetektor (30), der dazu ausgebildet ist zu ermitteln, ob ein Erdschluss in einem Energieversorgungspfad zwischen dem Energiewandler (10) und der sekundären Batterieeinheit (44) aufgetreten ist; und
einen Umschalter (30), der dazu ausgebildet ist, wenn der Erdschlussdetektor (30) ermittelt, dass ein Erdschluss im Energieversorgungspfad aufgetreten ist, die sekundäre Batterieeinheit (44) vom Energieversorgungspfad zu trennen,
**dadurch gekennzeichnet, dass**
die Erdungseinheit (30) eine Erdungsleitung (22) für eine Verbindung von mindestens einem des Paares von Energieanschlüssen der sekundären Batterieeinheit (44) an den Erdungspunkt (8) enthält und
die Lade- und Entladevorrichtung für ein Elektrofahrzeug ferner einen Selektor (14) umfasst, der zum Trennen der Erdungsleitung (22) vom Erdungspunkt (8) ausgebildet ist, während die sekundäre Batterieeinheit (44) geladen wird, und zum Verbinden der Erdungsleitung (22) mit dem Erdungspunkt (8) und Trennen des Energiewandlers (10) vom Erdungspunkt (8), während sich die sekundäre Batterieeinheit (44) entlädt.

2. Lade- und Entladevorrichtung für ein Elektrofahrzeug nach Anspruch 1, wobei die Erdungseinheit (30) dazu ausgebildet ist, wenn ein Erdschluss im Energieversorgungspfad aufgetreten ist, mindestens einen des Paares von Energieanschlüssen der sekundären Batterieeinheit (44) mit dem Erdungspunkt (8) zu verbinden, so dass eine Differenz zwischen einem Strom, der durch einen des Paares von Energieanschlüssen fließt, und einem anderen Strom, der durch den anderen des Paares von Energieanschlüssen fließt, verursacht wird.

3. Lade- und Entladevorrichtung für ein Elektrofahrzeug nach Anspruch 1, wobei:
die Erdungseinheit (30) eine Reihenschaltung aus zwei Impedanzkomponenten (31A, 31B) zwischen dem Paar von Energieanschlüssen der sekundären Batterieeinheit (44) enthält;
die Erdungsleitung (22) einen Verbindungspunkt der zwei Impedanzkomponenten (31A, 31B) mit dem Erdungspunkt (8) verbindet; und
die zwei Impedanzkomponenten (31A, 31B) dieselbe Impedanz haben.

4. Lade- und Entladevorrichtung für ein Elektrofahrzeug nach Anspruch 1, des Weiteren umfassend ein Kabel (2), das den Energiewandler (10) mit dem Paar von Energieanschlüssen der sekundären Batterieeinheit (44) verbindet,
wobei die Erdungseinheit (30) und der Erdschlussdetektor (30) am Kabel (2) bereitgestellt sind.

5. Lade- und Entladevorrichtung für ein Elektrofahrzeug nach Anspruch 1, des Weiteren umfassend:
ein Kabel (2), das den Energiewandler (10) mit dem Paar von Energieanschlüssen der sekundären Batterieeinheit (44) verbindet,
einen Stecker (3), der dazu ausgebildet ist, lösbar mit einer Steckdose des Elektrofahrzeugs (4) verbunden zu werden,
wobei ein Ende des Kabels (2) mit dem Energiewandler (10) verbunden ist und das andere Ende mit dem Stecker (3) verbunden ist und
die Erdungseinheit (30) und der Erdschlussdetektor (30) am Stecker (3) bereitgestellt sind.

6. Lade- und Entladevorrichtung für ein Elektrofahrzeug nach Anspruch 1, des Weiteren umfassend ein Kabel (2), das den Energiewandler (10) mit dem Paar von Energieanschlüssen der sekundären Batterieeinheit (44) verbindet,
wobei der Erdschlussdetektor (30) am Kabel (2) bereitgestellt ist und
die Erdungseinheit (30) am Elektrofahrzeug (4) bereitgestellt ist.

7. Lade- und Entladevorrichtung für ein Elektrofahrzeug nach Anspruch 1, wobei die Erdungseinheit (30) und der Erdschlussdetektor (30) am Elektrofahrzeug (4) bereitgestellt sind.

8. Lade- und Entladevorrichtung für ein Elektrofahrzeug nach Anspruch 1, wobei der Erdschlussdetektor (30) dazu ausgebildet ist, wenn bestätigt wird, dass eine Differenz zwischen Größen eines Stroms, der durch einen des Paares von Energieanschlüssen fließt, und einem anderen Strom, der durch den andere des Paares von Energieanschlüssen fließt, einen vorgegebenen Schwellenwert übersteigt, zu bestimmen, dass ein Erdschluss im Energieversorgungspfad aufgetreten ist.

9. Lade- und Entladevorrichtung für ein Elektrofahrzeug nach Anspruch 1, wobei der Elektrowandler (10) dazu ausgebildet ist, einen ersten Umwandlungsprozess zum Umwandeln von Energie von der externen Schaltung in eine vorgegebene erste Energie durchzuführen und die erhaltene erste Energie dem Paar von Energieanschlüssen der sekundären Batterieeinheit (44) zuzuleiten, und einen zweiten Umwandlungsprozess zum Umwandeln von Energie von dem Paar von Energieanschlüssen der sekundären Batterieeinheit (44) in eine vorgegebene zweite Energie durchzuführen und die erhaltene zweite Energie der externen Schaltung zuzuführen.

10. Lade- und Entladevorrichtung für ein Elektrofahrzeug nach Anspruch 1, wobei:
die externe Schaltung eine Wechselstromschaltung ist, die mit einer Wechselstromquelle (5) verbunden ist;
die sekundäre Batterieeinheit (44) eine sekundäre Batterie (40) enthält;
das Paar von Energieanschlüssen eine positive und negative Elektrode der sekundären Batterie (40) ist; und
der Energiewandler (10) einen Wechselstrom/Gleichstrom-Wandler enthält, der dazu ausgebildet ist, Wechselstrom von der externen Schaltung in Gleichstrom umzuwandeln, der für die sekundäre Batterieeinheit (44) geeignet ist, und Gleichstrom von der sekundären Batterieeinheit (44) in Wechselstrom umzuwandeln, der für die externe Schaltung geeignet ist.

11. Lade- und Entladevorrichtung für ein Elektrofahrzeug nach Anspruch 1, wobei:
die externe Schaltung eine Wechselstromschaltung ist, die mit einer Wechselstromquelle (5) verbunden ist;
die sekundäre Batterieeinheit (44) eine sekundäre Batterie (40) und eine Lade- und Entladeeinheit enthält, die das Paar von Energieanschlüssen enthält;
die Lade- und Entladeeinheit dazu ausgebildet ist, einen Ladungsprozess zum Laden der sekundären Batterie (40) mit Gleichstrom durchzuführen, der durch das Paar von Energieanschlüssen empfangen wird, und einen Entladeprozess durchzuführen, um Energie von der sekundären Batterie (40) in Wechselstrom umzuwandeln und den erhaltenen Wechselstrom von dem Paar von Energieanschlüssen auszugeben; und
der Energiewandler (10) einen Isolierungs-Wechselstrom/Wechselstrom-Wandler enthält, der dazu ausgebildet ist, Wechselstrom von der externen Schaltung in Wechselstrom umzuwandeln, der für die sekundäre Batterieeinheit (44) geeignet ist, und Wechselstrom von der sekundären Batterieeinheit (44) in Wechselstrom umzuwandeln, der für die externe Schaltung geeignet ist.

12. Lade- und Entladevorrichtung für ein Elektrofahrzeug nach Anspruch 1, wobei:
das Elektrofahrzeug (4) einen Schalter (41) zum Trennen der sekundären Batterieeinheit (44) vom Energieversorgungspfad enthält; und
der Umschalter (30) dazu ausgebildet ist, wenn der Erdschlussdetektor (30) ermittelt, dass ein Erdschluss im Energieversorgungspfad aufgetreten ist, den Schalter (41) zu steuern, die sekundäre Batterieeinheit (44) vom Energieversorgungspfad zu trennen.

13. Lade- und Entladevorrichtung für ein Elektrofahrzeug nach Anspruch 1, wobei:
die Lade- und Entladeeinheit einen Schalter (41) zum Trennen der sekundären Batterieeinheit (44) vom Energieversorgungspfad enthält; und
der Umschalter (30) dazu ausgebildet ist, wenn der Erdschlussdetektor (30) ermittelt, dass ein Erdschluss im Energieversorgungspfad aufgetreten ist, den Schalter zum Trennen der sekundären Batterieeinheit (44) vom Energieversorgungspfad zu steuern.

## Revendications

1. Dispositif de chargement et de déchargement de véhicule électrique, comprenant :
un convertisseur de puissance (10) interposé entre un circuit externe et une paire de bornes d'alimentation d'une unité de batterie secondaire (44) prévue sur un véhicule électrique (4), et configuré pour convertir l'énergie entre le circuit externe et l'unité de batterie secondaire (44) ;
une unité de mise à la terre (30) configurée pour relier au moins l'une de la paire de bornes d'alimentation de l'unité de batterie secondaire (44) à un point de mise à la terre (8) qui doit être relié au convertisseur de puissance (10) ;
un détecteur de défaut de terre (30) configuré pour déterminer si un défaut de terre s'est produit sur un trajet d'alimentation électrique situé entre le convertisseur de puissance (10) et l'unité de batterie secondaire (44) ; et
un commutateur (30) configuré, lorsque le détecteur de défaut de terre (30) détermine qu'un défaut de terre s'est produit sur le trajet d'alimentation électrique, pour séparer l'unité de batterie secondaire (44) du trajet d'alimentation électrique,
**caractérisé en ce que**
l'unité de mise à la terre (30) comprend une ligne de mise à la terre (22) destinée à relier au moins l'une de la paire de bornes d'alimentation de l'unité de batterie secondaire (44) au point de mise à la terre (8), et
le dispositif de chargement et de déchargement de véhicule électrique comprenant en outre un sélecteur (14) configuré pour séparer la ligne de mise à la terre (22) du point de mise à la terre (8) pendant que l'unité de batterie secondaire (44) est chargée, et pour relier la ligne de mise à la terre (22) au point de mise à la terre (8) et pour séparer le convertisseur de puissance (10) du point de mise à la terre (8) pendant que l'unité de batterie secondaire (44) se décharge.

2. Dispositif de chargement et de déchargement de véhicule électrique selon la revendication 1, dans lequel l'unité de mise à la terre (30) est configurée, lorsqu'un défaut de terre s'est produit sur le trajet d'alimentation électrique, pour relier au moins l'une de la paire de bornes d'alimentation de l'unité de batterie secondaire (44) au point de mise à la terre (8) de façon à provoquer une différence entre un courant qui circule dans l'une de la paire de bornes d'alimentation et un autre courant qui circule dans l'autre de la paire de bornes d'alimentation.

3. Dispositif de chargement et de déchargement de véhicule électrique selon la revendication 1, dans lequel :
l'unité de mise à la terre (30) comprend un circuit série constitué de deux composants d'impédance (31A, 31B) entre les deux bornes d'alimentation de l'unité de batterie secondaire (44) ;
la ligne de mise à la terre (22) relie un point de raccordement des deux composants d'impédance (31A, 31B) au point de mise à la terre (8) ; et
les deux composants d'impédance (31A, 31B) possèdent la même impédance.

4. Dispositif de chargement et de déchargement de véhicule électrique selon la revendication 1, comprenant en outre un câble (2) qui relie le convertisseur de puissance (10) à la paire de bornes d'alimentation de l'unité de batterie secondaire (44),
l'unité de mise à la terre (30) et le détecteur de défaut de terre (30) étant prévus sur le câble (2).

5. Dispositif de chargement et de déchargement de véhicule électrique selon la revendication 1, comprenant en outre :
un câble (2) qui relie le convertisseur de puissance (10) à la paire de bornes d'alimentation de l'unité de batterie secondaire (44) ; et
un connecteur à fiche (3) configuré pour être relié de manière amovible à un connecteur à prise du véhicule électrique (4),
le câble (2) ayant une extrémité reliée au convertisseur de puissance (10) et l'autre extrémité reliée au connecteur à fiche (3), et
l'unité de mise à la terre (30) et le détecteur de défaut de terre (30) étant prévus sur le connecteur à fiche (3).

6. Dispositif de chargement et de déchargement de véhicule électrique selon la revendication 1, comprenant en outre un câble (2) qui relie le convertisseur de puissance (10) à la paire de bornes d'alimentation de l'unité de batterie secondaire (44),
le détecteur de défaut de terre (30) étant prévu sur le câble (2), et
l'unité de mise à la terre (30) étant prévue sur le véhicule électrique (4).

7. Dispositif de chargement et de déchargement de véhicule électrique selon la revendication 1, dans lequel l'unité de mise à la terre (30) et le détecteur de défaut de terre (30) sont prévus sur le véhicule électrique (4).

8. Dispositif de chargement et de déchargement de véhicule électrique selon la revendication 1, dans lequel le détecteur de défaut de terre (30) est configuré, lorsqu'il reconnaît qu'une différence entre les magnitudes d'un courant qui circule dans l'une de la paire de bornes d'alimentation et d'un courant qui circule dans l'autre de la paire de bornes d'alimentation dépasse un seuil prédéterminé, pour déterminer qu'un défaut de terre s'est produit sur le trajet d'alimentation électrique.

9. Dispositif de chargement et de déchargement de véhicule électrique selon la revendication 1, dans lequel le convertisseur de puissance (10) est configuré pour effectuer un premier processus de conversion afin de convertir l'énergie qui provient du circuit externe en une première énergie prédéterminée, et pour fournir la première énergie résultante à la paire de bornes d'alimentation de l'unité de batterie secondaire (44), et pour effectuer un second processus de conversion afin de convertir l'énergie qui provient de la paire de bornes d'alimentation de l'unité de batterie secondaire (44) en une seconde énergie prédéterminée et pour fournir la seconde énergie résultante au circuit externe.

10. Dispositif de chargement et de déchargement de véhicule électrique selon la revendication 1, dans lequel :
le circuit externe est un circuit CA relié à une source d'énergie CA (5) ;
l'unité de batterie secondaire (44) comprend une batterie secondaire (40) ;
les deux bornes d'alimentation sont les électrodes positive et négative de la batterie secondaire (40) ; et
le convertisseur de puissance (10) comprend un convertisseur CA/CC configuré pour convertir l'énergie CA qui provient du circuit externe en une énergie CC adaptée pour l'unité de batterie secondaire (44), et pour convertir l'énergie CC qui provient de l'unité de batterie secondaire (44) en énergie CA adaptée pour le circuit externe.

11. Dispositif de chargement et de déchargement de véhicule électrique selon la revendication 1, dans lequel :
le circuit externe est un circuit CA relié à une source d'énergie CA (5) ;
l'unité de batterie secondaire (44) comprend une batterie secondaire (40) et une unité de chargement et de déchargement qui comprend la paire de bornes d'alimentation ;
l'unité de chargement et de déchargement est configurée pour effectuer un processus de chargement destiné à charger la batterie secondaire (40) avec l'énergie CA reçue par la paire de bornes d'alimentation, et pour effectuer un processus de déchargement destiné à convertir l'énergie qui provient de la batterie secondaire (40) en énergie CA et pour fournir l'énergie CA résultante qui provient de la paire de bornes d'alimentation ; et
le convertisseur de puissance (10) comprend un convertisseur CA/CA d'isolation configuré pour convertir l'énergie CA qui provient du circuit externe en une énergie CA adaptée pour l'unité de batterie secondaire (44), et pour convertir l'énergie CA qui provient de l'unité de batterie secondaire (44) en énergie CA adaptée pour le circuit externe.

12. Dispositif de chargement et de déchargement de véhicule électrique selon la revendication 1, dans lequel :
le véhicule électrique (4) comprend un commutateur (41) destiné à la séparation de l'unité de batterie secondaire (44) du trajet d'alimentation électrique ; et
le commutateur (30) est configuré, lorsque le détecteur de défaut de terre (30) détermine qu'un défaut de terre s'est produit sur le trajet d'alimentation électrique, pour contrôler le commutateur (41) afin de séparer l'unité de batterie secondaire (44) du trajet d'alimentation électrique.

13. Dispositif de chargement et de déchargement de véhicule électrique selon la revendication 11, dans lequel :
l'unité de chargement et de déchargement comprend un commutateur (41) destiné à la séparation de l'unité de batterie secondaire (44) et du trajet d'alimentation électrique ; et
le commutateur (30) est configuré, lorsque le détecteur de défaut de terre (30) détermine qu'un défaut de terre s'est produit sur le trajet d'alimentation électrique, pour contrôler le commutateur afin de séparer l'unité de batterie secondaire (44) du trajet d'alimentation électrique.
